# DEMANDE DE BREVET EUROPEEN

(11) **EP 2 620 650 A1**
(43) Date de publication de la demande: **31.07.2013**
(21) Numéro de dépôt: 12305110.4
(22) Date de dépôt: 27.01.2012
(51) Int. Cl.: F04D 29/047, F04D 13/06, F16C 35/02

(54) **Rétention de paliers par liaison de forme dans une pompe à moteur à gaine**

(71) Demandeur: Pompes Salmson, 78400 Chatou (FR)
(72) Inventeur: Bouilly, Hervé, 53940 Le Genest St Isle (FR); Lestrat, Olivier, 18700 Oizon (FR); Lemesle, Hugues, 53970 Nuille sur Vicoin (FR)
(74) Mandataire: Hirsch & Associés

(57) **Abrégé**

L'invention se rapporte à Pompe (10) de circulation à moteur à rotor noyé comprenant un moteur ayant un rotor (16) dans une cavité rotorique formée par un tube disposé dans l'entrefer entre le rotor (16) et le stator, et un arbre creux (20) entraîné en rotation par le rotor (16), l'arbre creux (20) étant monté en rotation par rapport au tube dans au moins un coussinet de guidage (36 ; 38), l'arbre creux (20) et la cavité rotorique formant un passage de fluide, dans laquelle le tube présente au moins un relief (212), dans le passage de fluide, adapté à coopérer avec le coussinet de guidage (36 ; 38) pour limiter le déplacement du coussinet de guidage (36 ; 8) par rapport au tube (9).

## Description

L'invention se rapporte à une pompe de circulation de fluide à moteur à rotor noyé.

Une pompe de circulation peut être utilisée dans des installations où un fluide tel que de l'eau est mis en circulation par la pompe. La pompe est entraînée par un moteur. Le moteur peut être du type à rotor noyé dans une cavité rotorique. Dans un tel moteur à rotor noyé, un fluide circule dans un évidement autour du rotor. Il peut s'agir du fluide mis en circulation par la pompe.

Certaines pièces constitutives de telles pompes sont soumises à des efforts qui peuvent engendrer du fluage. Ces efforts provoquent des déformations sur ces pièces qui peuvent rendre la pompe inopérante, si ces pièces ne présentent pas des formes particulières. Il existe donc un besoin pour une pompe permettant de maitriser les conséquences du fluage et de favoriser l'écoulement dans la cavité rotorique.

Pour cela, l'invention propose une pompe de circulation à moteur à rotor noyé comprenant
- un moteur ayant un rotor dans une cavité rotorique formée par un tube disposé dans l'entrefer entre le rotor et le stator, et
- un arbre creux entraîné en rotation par le rotor, l'arbre creux étant monté en rotation par rapport au tube dans au moins un coussinet de guidage, l'arbre creux et la cavité rotorique formant un passage de fluide,
dans laquelle le tube présente au moins un relief, dans le passage de fluide, adapté à coopérer avec le coussinet de guidage pour limiter le déplacement du coussinet de guidage par rapport au tube.

De préférence, la pompe selon l'invention présente une plusieurs ou des caractéristiques suivantes, prises seules ou en combinaison :
- le relief du tube comprend un godron adapté à coopérer avec le coussinet de guidage pour limiter le mouvement longitudinal du coussinet de guidage ;
- le coussinet de guidage présente un relief complémentaire au relief du tube ;
- les reliefs complémentaires comprennent au moins une rainure longitudinale et au moins un ergot adapté à être inséré dans la rainure longitudinale, pour limiter le déplacement du coussinet de guidage en rotation par rapport au tube autour de l'axe de l'arbre creux ;
- la rainure longitudinale est réalisée sur le coussinet de guidage, et l'ergot est réalisé sur le tube ;
- les reliefs complémentaires comprennent une rainure circonférentielle et au moins un godron adapté à être inséré dans la rainure circonférentielle pour limiter le déplacement longitudinal du coussinet de guidage par rapport au tube ;
- la rainure circonférentielle est réalisée sur le coussinet de guidage et le godron sur le tube ;
- le tube est réalisé par moulage, le godron étant obtenu par démoulage en contre dépouille ou par tiroir ;
- la pompe comprend :
   - un coussinet de guidage,
   - deux coussinets de guidage centrés, ou
   - deux coussinets de guidage disposés de part et d'autre du rotor ;
- la pompe comprend une bague flottante ; et
- le tube et la bague flottante présentent des reliefs complémentaires pour limiter le déplacement longitudinal et/ou en rotation de la bague flottante par rapport au tube.

D'autres caractéristiques et avantages de l'invention apparaîtront à la lecture de la description détaillée qui suit de modes de réalisation de l'invention, donnés à titre d'exemple uniquement et en références aux dessins qui montrent :
- figure 1, une vue en coupe d'une pompe de circulation ;
- figure 2, un sous-ensemble d'un moteur de pompe de circulation ;
- les figures 3 et 4 des vues en coupe de l'exemple de pompe de circulation de la figure 1, au niveau de coussinets de guidage avant et arrière, respectivement.

L'invention se rapporte à une pompe de circulation à moteur à rotor noyé. La pompe comprend tout d'abord un moteur ayant un rotor dans une cavité rotorique. La cavité rotorique est formée par un tube disposé dans l'entrefer entre le rotor et le stator. La pompe comprend également un arbre entraîné en rotation par le rotor. L'arbre est monté en rotation par rapport au tube dans au moins un coussinet de guidage. Le tube présente au moins un relief adapté à coopérer avec le coussinet de guidage pour limiter le déplacement du coussinet de guidage par rapport au tube. Le relief est formé dans le passage de fluide. Ainsi, la cavité mise en oeuvre pour faire passer du fluide dans le moteur, est également mise en oeuvre pour limiter les déplacements du coussinet de guidage par rapport au tube.

Ainsi, malgré les efforts de fluage qui ont tendance à déformer les pièces constitutives de la pompe, celles-ci sont maintenues en place, les unes par rapport aux autres. La longévité de la pompe est donc assurée.

Ce relief est particulièrement utile dans le cas où les pièces constitutives de la pompe (notamment le tube et les coussinets) sont en matières sensibles au fluage, en particulier lors de nombreuses variations de température, et dans le cas où ces pièces sont en des matériaux qui n'acceptent pas un serrage supérieur aux variations de serrage provoquées par les écarts de température. Ceci est par exemple le cas lorsque le tube est réalisé en matière composite pour réduire les pertes de rendement du moteur et en réduire le coût par exemple.

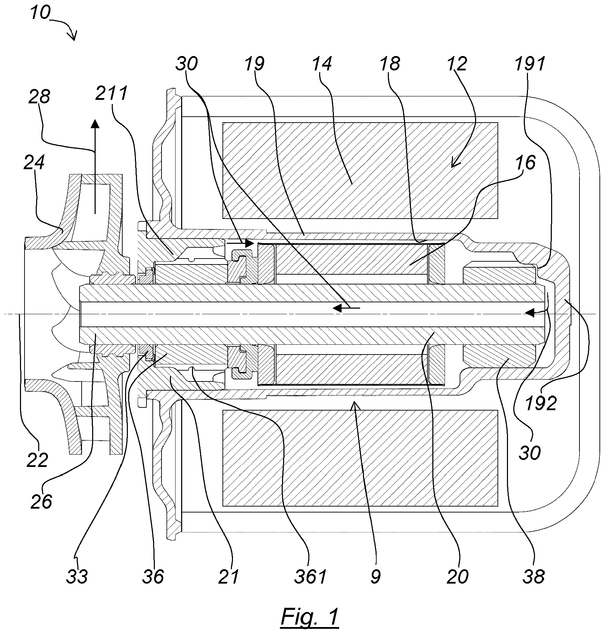

La figure 1 montre une vue en coupe d'une pompe 10. La pompe 10 peut notamment être une pompe de circulation de fluide pour une installation de chauffage. La pompe 10 comporte un moteur 12. Le moteur 12 comporte un stator 14 et un rotor 16. Le rotor 16 est entraîné en rotation par le stator 14 dans une cavité rotorique 18 formée par un tube 9. Le tube 9 est formé d'une douille 19 (c'est-à-dire un cylindre dont une extrémité est bouchée), fermée par un bouchon 21. Le rotor entraîne un arbre creux 20 en rotation autour de l'axe 22 de l'arbre. Une roue 24 est fixée à une extrémité 26 de l'arbre 20. L'arbre creux 20 entraîne en rotation la roue 24. La roue 24 est adaptée à créer un flux de fluide par centrifugation selon la flèche 28. La roue aspire le fluide et le refoule selon la flèche 28. La centrifugation permet la circulation du fluide dans une canalisation non représentée. Une bague flottante 33 est montée longitudinalement entre le bouchon 21 et un coussinet avant 36 et radialement entre le bouchon 21 et l'arbre creux 20.

La pompe comporte un passage de fluide symbolisé par les flèches 30 dans la douille 19. Le passage de fluide 30 s'étend dans la douille 19 et permet la circulation de fluide (de l'eau par exemple) dans le moteur. Le passage de fluide 30 permet de noyer le rotor 16, le moteur étant dit à rotor noyé. Le passage de fluide 30 permet la lubrification des pièces pivotantes du moteur et de la pompe. Le passage de fluide 30 permet également un bon transfert de chaleur et donc la réduction de la température générée par le moteur en fonctionnement. Ceci évite l'implémentation d'une ventilation du moteur. Il n'est ainsi pas nécessaire de prévoir une étanchéité de l'intérieur du moteur. La circulation du fluide permet l'allongement de la durée de vie des pièces pivotantes. De plus, la circulation du fluide permet de réduire le niveau de bruit par rapport au moteur sans circulation. En outre cette technologie implique pour ces raisons un coût réduit.

Ici, l'arbre creux 20 est guidé en rotation par deux coussinets ou paliers. Un coussinet avant 36 est prévu à proximité de l'entrée du passage de fluide 30. Un coussinet arrière 38 est prévu à l'extrémité de l'arbre creux 20 au fond de la cavité rotorique. La présence de fluide permet la lubrification des coussinets.

Les coussinets avant 36 et arrière 38, et avec eux l'arbre creux 20, sont maintenus en position le long de l'axe 22 du fait de la géométrie de la cavité rotorique 18. Ainsi, le tube 9, plus précisément ici la douille 19, présente un ou plusieurs épaulements 191 à proximité de son fond 192 à l'opposé de la roue 24. Cet épaulement 191 empêche le coussinet arrière 38 de se rapprocher du fond 192 du tube 19.

De manière analogue, la cavité rotorique 18 est délimitée à proximité de la roue 24 par le bouchon 21. Le bouchon 21 équipé du coussinet 36 et de la bague flottante 33 est inséré dans la douille 19, après que l'arbre creux 20 et le coussinet 38 ait été mis en place, pour boucher l'extrémité avant du tube 19, située à proximité de la roue 24. Le bouchon 21 présente également un ou plusieurs épaulements 211 qui coopère avec le coussinet avant 36 pour l'empêcher de se déplacer dans la cavité rotorique 18, en direction de la roue 24.

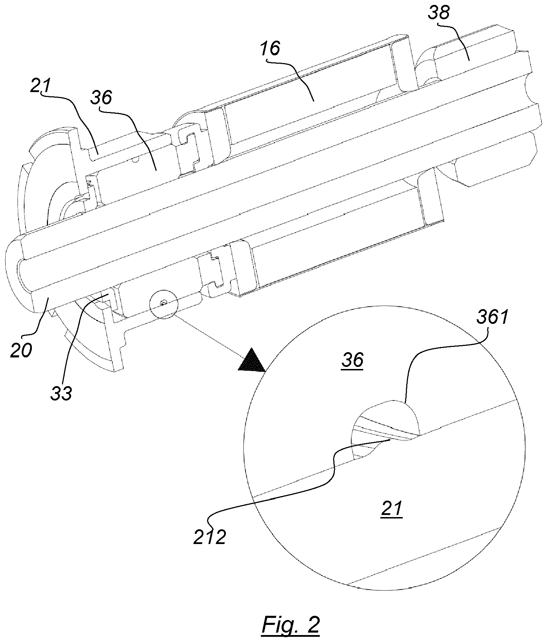

Comme cela est visible sur les figures 1 et 2, le coussinet avant 36 présente une rainure circonférentielle 361. La figure 2 illustre la présence d'un godron 212 à la surface radialement interne du bouchon 21. Le godron est adapté à coopérer avec la rainure circonférentielle 361 pour limiter le déplacement du coussinet avant 36. Il est à noter ici que plusieurs godrons peuvent être formés sur la surface radialement interne du bouchon 21. En outre, il est à noter que la hauteur du godron (de préférence au moins égale à 50 µm, de préférence encore comprise entre 50 et 150µm) est nettement inférieure à la profondeur de la rainure circonférentielle 363 (qui est de l'ordre de 0,5 à 1 mm). Le bouchon étant réalisé par moulage de matière plastique, il est particulièrement intéressant de former le ou les godrons par démoulage en contre-dépouille ou par tiroir. La fabrication du ou des godrons de l'une de ces manières présente un coût réduit et une bonne résistance mécanique.

Il est à noter ici que la rainure circonférentielle 361 du coussinet avant 36 est facultative. Il pourrait en effet être prévu que le godron maintient le coussinet avant 36 en position par coopération avec un bord du coussinet 36, voire que deux godrons coopèrent avec les deux bords opposés (avant et arrière) du coussinet avant 36.

Par ailleurs, la douille 19 peut également présenter un ou plusieurs godrons, le coussinet arrière présentant une rainure circonférentielle destinée à coopérer avec le ou les godrons pour limiter le déplacement du coussinet arrière par rapport au tube et/ou pour limiter la déformation de ce coussinet arrière.

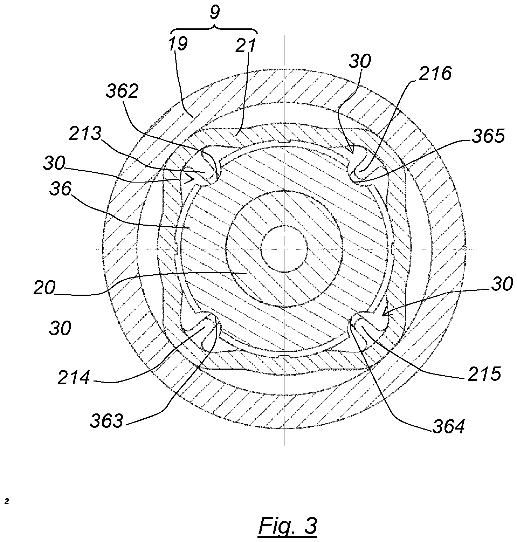

Comme cela est visible sur la figure 3, le coussinet avant 36 présente également des rainures longitudinales 362-365 formés dans le passage du fluide. En d'autres termes, les rainures longitudinales délimitent le passage du fluide. Le tube 9, et plus précisément le bouchon 21, présente des ergots 213-216 complémentaires, également réalisés dans le passage du fluide. Les ergots 213-216 sont destinés à coopérer avec les rainures longitudinales 362-365 pour limiter la rotation du coussinet avant 36 par rapport au tube 9. Pour ce faire, les ergots 213-216 plongent chacun dans une rainure longitudinale 362-365 correspondante, tout en laissant un espace entre le sommet de l'ergot et le fond de la rainure. De fait, le passage de fluide peut être réalisé entre l'ergot et la rainure, tout en assurant que la rotation du coussinet avant 36 par rapport au bouchon 21 est limitée.

Dans un mode de réalisation particulièrement avantageux aucune autre cavité n'est prévue pour le passage du fluide que celles partiellement délimitées par les ergots et les rainures.

Il est à noter que les ergots sur le tube et les rainures sur le coussinet peuvent facilement être réalisés par moulage du tube et du coussinet. Le coût de réalisation de ces ergots et de ces rainures est donc relativement faible.

En outre, la limitation de la rotation du coussinet avant par rapport au bouchon, grâce à la coopération des ergots avec les rainures est très robuste.

Le coussinet arrière 38 et la douille 19 peuvent présenter une géométrie analogue. Les mêmes effets que pour le coussinet avant 36 sont alors obtenus. Le coussinet arrière présente alors des rainures longitudinales destinées à coopérer avec des ergots ménagés sur la surface radialement interne de la douille. Dans ce cas, le nombre de rainures longitudinales sur le coussinet avant est de préférence différent du nombre de rainures longitudinales sur le coussinet arrière. De préférence, ces deux nombres sont premiers entre eux pour uniformiser l'usure des pièces.

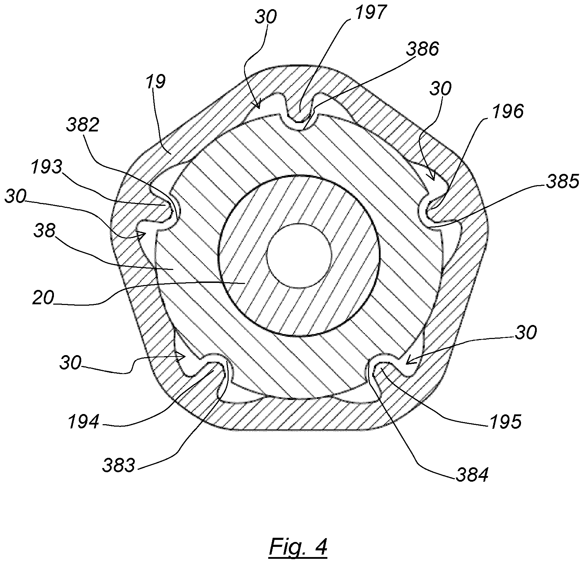

La figure 4 illustre un coussinet arrière 38 présentant également des rainures longitudinales 382-386 formés dans le passage du fluide. En d'autres termes, les rainures longitudinales délimitent le passage du fluide. Le tube 9, et plus précisément la douille 19, présente des ergots 193-197 complémentaires, également réalisés dans le passage du fluide. Les ergots 193-197 sont destinés à coopérer avec les rainures longitudinales 382-386 pour limiter la rotation du coussinet arrière 38 par rapport au tube 9. Pour ce faire, les ergots 193-197 plongent chacun dans une rainure longitudinale 382-386 correspondante, tout en laissant un espace entre le sommet de l'ergot et le fond de la rainure. De fait, le passage de fluide peut être réalisé entre l'ergot et la rainure, tout en assurant que la rotation du coussinet arrière 38 par rapport à la douille 19 est limitée.

Par ailleurs, il est à noter que le principe de limiter le déplacement en rotation et/ou en translation longitudinale décrit ci-avant pour les coussinets avant et arrière peut également être mis en oeuvre pour l'assemblage d'une bague flottante 33 dans le tube 19 et notamment dans le bouchon 21. Cette bague flottante permet de filtrer le fluide et limite par la même l'encrassement dans le passage de fluide 30 et dans le conduit à l'intérieur de l'arbre creux 20.

Bien entendu, la présente invention n'est pas limitée aux exemples décrits ci-avant. Au contraire, l'invention se rapporte à de nombreuses variantes de ces exemples, accessibles à l'homme de l'art.

Tout d'abord, les rainures peuvent être ménagées sur la face interne du tube, le ou les ergots et/ou le ou les godrons étant alors réalisés sur la surface externe du coussinet avant et/ou arrière.

D'autres géométries de reliefs que les godrons, les nervures et les ergots peuvent également être envisagées.

Par ailleurs, bien que les deux coussinets illustrés soient de diamètres extérieurs sensiblement égaux, ils peuvent également être de diamètres extérieurs différents, le diamètre extérieur du coussinet avant étant notamment légèrement supérieur au diamètre extérieur du rotor 16.

Il est également à noter qu'en fonction de la section de tube 9 et des coussinets avant et arrière, le débit de fluide qui passe dans les passages de fluide peut être augmenté ou diminué.

Enfin, bien que la pompe représentée sur la figure 1 comprenne deux coussinets disposés de part et d'autre du rotor 16, d'autres configurations sont possibles. Notamment, l'arbre peut être monté dans un seul coussinet ou dans deux coussinets centrés.

## Revendications

1. Pompe (10) de circulation à moteur à rotor noyé comprenant
- un moteur (12) ayant un rotor (16) dans une cavité rotorique (18) formée par un tube (9) disposé dans l'entrefer entre le rotor (16) et le stator (14), et
- un arbre creux (20) entraîné en rotation par le rotor (16), l'arbre creux (20) étant monté en rotation par rapport au tube dans au moins un coussinet de guidage (36 ; 38), l'arbre creux (20) et la cavité rotorique (18) formant un passage de fluide (30),
dans laquelle le tube (9) présente au moins un relief (193-197 ; 212 ; 213-216), dans le passage de fluide, adapté à coopérer avec le coussinet de guidage (36 ; 38) pour limiter le déplacement du coussinet de guidage (36 ; 8) par rapport au tube (9).

2. Pompe selon la revendication 1, dans laquelle le relief du tube (9) comprend un godron (212) adapté à coopérer avec le coussinet de guidage (36 ; 38) pour limiter le mouvement longitudinal du coussinet de guidage (36 ; 38).

3. Pompe selon la revendication 1 ou 2, dans laquelle le coussinet de guidage (36 ; 38) présente un relief complémentaire (361 ; 362-365 ; 382-386) au relief (193-197 ; 212; 213-216) du tube (9).

4. Pompe selon la revendication 3, dans laquelle les reliefs complémentaires comprennent au moins une rainure longitudinale (362-365 ; 382-386) et au moins un ergot (213-216 ; 193-197) adapté à être inséré dans la rainure longitudinale (362-365 ; 382-386), pour limiter le déplacement du coussinet de guidage (36 ; 38) en rotation par rapport au tube (9) autour de l'axe (22) de l'arbre creux (20).

5. Pompe selon la revendication 4, dans laquelle la rainure longitudinale (362-365 ; 382-386) est réalisée sur le coussinet de guidage (36 ; 38), et l'ergot (213-216 ; 193-197) est réalisé sur le tube (9).

6. Pompe selon l'une des revendications 3 à 5, dans laquelle les reliefs complémentaires comprennent une rainure circonférentielle (361) et au moins un godron (212) adapté à être inséré dans la rainure circonférentielle (361) pour limiter le déplacement longitudinal du coussinet de guidage (36) par rapport au tube (9).

7. Pompe selon la revendication 6, dans laquelle la rainure circonférentielle (316) est réalisée sur le coussinet de guidage (36) et le godron (212) sur le tube (9).

8. Pompe selon la revendication 2 ou 7, dans laquelle le tube (9) est réalisé par moulage, le godron (212) étant obtenu par démoulage en contre dépouille ou par tiroir.

9. Pompe selon l'une quelconque des revendications précédentes, comprenant :
- un coussinet de guidage,
- deux coussinets de guidage centrés, ou
- deux coussinets de guidage (36 ; 38) disposés de part et d'autre du rotor.

10. Pompe selon l'une quelconque des revendications précédentes comprenant une bague flottante (33).

11. Pompe selon la revendication 10, dans laquelle le tube (9) et la bague flottante (33) présentent des reliefs complémentaires pour limiter le déplacement longitudinal et/ou en rotation de la bague flottante (33) par rapport au tube (9).
